# EUROPEAN PATENT APPLICATION

(11) **EP 3 813 035 A1**
(43) Date of publication of application: **28.04.2021**
(21) Application number: 19910808.5
(22) Date of filing: 11.11.2019
(51) Int. Cl.: G08G 1/0967, H04L 29/08, B60W 40/00

(54) **VEHICLE CONTROL METHOD AND DEVICE**

(30) Priority: 16.01.2019 CN 201910040772
(71) Applicant: Beijing Baidu Netcom Science And Technology Co., Ltd., Beijing 100085 (CN)
(72) Inventor: WU, Zelin, Beijing 100085 (CN); WANG, Yue, Beijing 100085 (CN); LIU, Yingnan, Beijing 100085 (CN); RAO, Wenlong, Beijing 100085 (CN); WANG, Zijie, Beijing 100085 (CN)
(74) Representative: Gill Jennings & Every LLP
(86) International application number: PCT/CN2019/116975
(87) International publication number: WO 2020/147390

(57) **Abstract**

A vehicle control method and device. The method comprises: a vehicle (101) obtains cooperation driving association information generated by other vehicles, wherein other vehicles and the vehicle (101) cooperate for driving, and the cooperation driving association information is used for preventing the vehicle (101) from executing an operation conflicting with an operation executed by other vehicles; and execute an operation associated with the obtained cooperation driving association information. The vehicle control device is mounted in the vehicle, and comprises an obtaining unit (401) and an executing unit (402). The cooperation driving between vehicles is implemented and the safety of vehicle driving is improved.

## Description

This patent application claims priority to Chinese Patent Application No. 201910040772.0, filed on January 16, 2019, and entitled "Vehicle Control Method and Apparatus", which is incorporated herein by reference in its entirety.

### TECHNICAL FIELD

The present disclosure relates to the field of vehicles, in particular to the field of vehicle control, and more particularly to a vehicle control method and apparatus.

### BACKGROUND

Currently, with the widespread use of computer technology such as image recognition on vehicles, vehicles have certain environmental perception capability. However, the environmental perception capability of the vehicle is limited, and in a case such as traveling to an area having a complex driving environment, traveling depending on the environmental perception capability of the vehicle itself may occur a case, such as the vehicle cannot pass through the area having the complex driving environment, an accident occurs, or the like.

### SUMMARY

Embodiments of the present disclosure provide a vehicle control method and apparatus.

In a first aspect, an embodiment of the present disclosure provides a vehicle control method, including: acquiring, by a vehicle, cooperative travel association information generated by an other vehicle, where the other vehicle travels in cooperation with the vehicle, and the cooperative travel association information is used to avoid the vehicle from performing an operation conflicted with an operation performed by the other vehicle; and performing an operation associated with the acquired cooperative travel association information.

In a second aspect, an embodiment of the present disclosure provides a vehicle control apparatus, the vehicle control apparatus being mounted in a vehicle, the vehicle control apparatus including: an acquiring unit configured to acquire cooperative travel association information generated by an other vehicle traveling in cooperation with the vehicle, where the cooperative travel association information is used to avoid the vehicle from performing an operation conflicted with an operation performed by the other vehicle; and an execution unit configured to perform an operation associated with the acquired cooperative travel association information.

According to the vehicle control method and apparatus provided in embodiments of the present disclosure, cooperative travel association information generated by an other vehicle is acquired by a vehicle, the other vehicle traveling in cooperation with the vehicle, and the cooperative travel association information being used to avoid the vehicle from performing an operation conflicted with an operation performed by the other vehicle; and an operation associated with the acquired cooperative travel association information is performed by the vehicle. By acquiring cooperative travel association information generated by the other vehicle during traveling, the vehicle can be avoided from performing an operation conflicted with an operation performed by the other vehicle, thereby achieving cooperative traveling between the vehicles and improving the safety of the vehicle traveling.

### Brief DESCRIPTION OF THE DRAWINGS

Other features, objects, and advantages of the present disclosure will become more apparent by reading the detailed description of non-limiting embodiments made with reference to the following drawings.
Fig. 1 illustrates an example system architecture in which the method of an embodiment of the present disclosure may be applied;
Fig. 2 shows a flowchart of a vehicle control method according to an embodiment of the present disclosure;
Fig. 3 shows a flowchart of a vehicle control method according to another embodiment of the present disclosure;
Fig. 4 shows a schematic structural diagram of a vehicle control device according to an embodiment of the present disclosure.

### DETAILED DESCRIPTION

The present disclosure is described in further detail below with reference to accompanying drawings and embodiments. It is to be understood that specific embodiments described herein are merely illustrative of the related disclosure and are not restrictive of the disclosure. It is also to be noted that, for ease of description, only parts related to the disclosure are shown in the drawings.

It should be noted that embodiments in the present disclosure and the features in the embodiments may be combined with each other without conflict. The present disclosure will now be described in detail with reference to the accompanying drawings and embodiments.

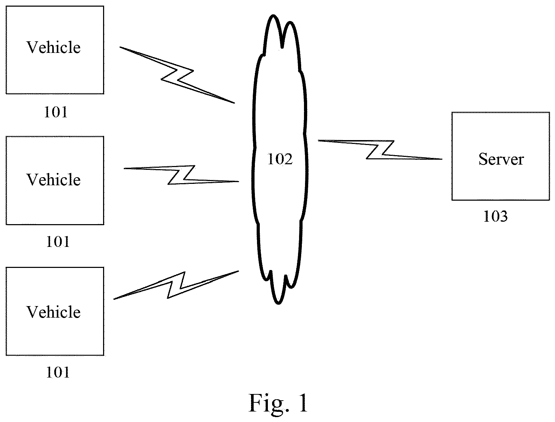

Fig. 1 illustrates an example system architecture in which the vehicle control method of an embodiment of the present disclosure may be applied.

As shown in Fig. 1, the system architecture may include a plurality of vehicles 101, a network 102, and a server 103. Network 102 is a wireless communication network. The vehicle 101 may be an autonomous driving vehicle having an autonomous driving capability. The plurality of vehicles 101 may perform cooperative traveling, and before the plurality of vehicles 101 may perform cooperative traveling, at least some of the plurality of vehicles 101, for example, a vehicle serving as a host vehicle, may complete verification required by the plurality of vehicles 101 for cooperative traveling, and after passing the verification, the plurality of vehicles 101 may perform cooperative traveling. It is also possible for the server 103 to complete the verification required for cooperative traveling of the plurality of vehicles 101.

The vehicle 101 may be provided with a CPU, a memory, a wireless network card, a GPS, a camera, a lidar, a millimeter wave radar, or the like. The control system of the vehicle 101 may include an environment perception unit, a driving decision unit, and the like that operate on the operating system of the vehicle 101. The environment perception unit acquires a road condition image and laser point cloud data from sensors such as a camera and a laser radar, and senses the driving environment of the vehicle 101 to obtain environment sensing information. The environment sensing information may include a building around the vehicle 101, an obstacle, a road condition of a road, and the like.

The vehicle 101 may generate cooperative travel association information, and the vehicle 101 may transmit the generated cooperative travel association information to the server 103.

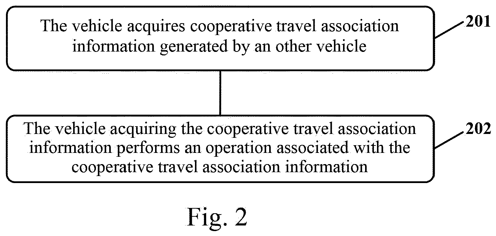

Referring to Fig. 2, there is shown a flow of a vehicle control method according to an embodiment of the present disclosure. The method includes the following steps.

Step 201, the vehicle acquires cooperative travel association information generated by an other vehicle.

In the present embodiment, the other vehicle does not specifically refer to a certain vehicle. For a given vehicle, vehicles other than the given vehicle that may travel in cooperation with the given vehicle may be referred to as the other vehicle.

In the present embodiment, data may be transmitted between vehicles that may travel in cooperation with the each other using vehicle-to-vehicle technology (V2V). One vehicle may acquire cooperative travel association information generated by other vehicles by sending a request for acquiring cooperative travel association information to other vehicles. Each vehicle may send a request for acquiring cooperative travel association information to at least one other vehicle, the request for acquiring cooperative travel association information includes an identification of a type of cooperative travel association information expected to be acquired by the vehicle sending the request for acquiring cooperative travel association information, and then the vehicle sending the request for acquiring cooperative travel association information may receive the cooperative travel association information, returned by the at least one other vehicle, expected to be acquired by the vehicle sending the request for acquiring cooperative travel association information.

In the present embodiment, a vehicle may acquire cooperative travel association information generated by an other vehicle that travels in cooperation with the vehicle. The cooperative travel association information may be used to avoid the vehicle acquiring the cooperative travel association information from performing an operation conflicted with an operation performed by the other vehicle.

For example, a plurality of vehicles traveling in cooperation together travel from a starting point position to the same destination. When the plurality of vehicles traveling in cooperation travel to an intersection of narrow width, to prevent at least some of the plurality of vehicles traveling in cooperation from simultaneously passing through the intersection of narrow road width, a host vehicle traveling in the front of the plurality of vehicles traveling in cooperation passes through the intersection of narrow road width first, then the host vehicle traveling in the front of the plurality of vehicles traveling in cooperation determines the order in which each of other vehicles except the host vehicle passes through the intersection of narrow width, and the host vehicle generates travel association information including the order in which each other vehicle passes.

When each of the other vehicles except the host vehicle detects approaching the intersection of the narrow road width according to acquired positioning information and an electronic map such as a high precision map, each of the other vehicles may send a request for acquiring cooperative travel association information to the host vehicle to acquire cooperative travel association information including an order in which each other vehicle passes. Each of the other vehicles sequentially passes through the intersection of the narrow road width in the passing order. The other vehicle may send notification information to the host vehicle after passing through the intersection of the narrow road width, and the host vehicle updates the passing order of the other vehicles that have recently passed through the intersection of the narrow road width. All other vehicles that have not passed through the intersection of the narrow road width may send a request for acquiring cooperative travel association information to the host vehicle at a predetermined interval, the host vehicle may generate cooperative travel association information including the passing order of the other vehicles that have recently passed through the intersection of the narrow road width, and send cooperative travel association information including the passing order of the other vehicles that have recently passed through the intersection of the narrow road width to each of the other vehicles that have not passed through the intersection of the narrow road width. Each other vehicle determines, based on the passing order of the other vehicles that have recently passed through the intersection of narrow road width, whether it's passing order is after the passing order of the other vehicles that have recently passed through the intersection of narrow road width and is closest to the passing order of the other vehicles that have recently passed through the intersection of narrow road width, and determines, based on the determination result, whether to pass through the intersection of narrow road width.

For a vehicle that has acquired the cooperative travel association information, the operation performed by the other vehicle that has the passing order of the intersection of narrow road width ahead of the vehicle is passing through the intersection of narrow road width, and the cooperative travel association information acquired by the vehicle can be used to avoid the vehicle from performing an operation conflicted with the operation performed by the other vehicle, that is, to avoid the vehicle from performing an operation conflicted with the operation performed by the other vehicle (that is, the vehicle also passes through the intersection of the narrow road width) when the other vehicle that has the passing order of the intersection of narrow road width ahead of the vehicle passes through the intersection of narrow road width.

For another example, a plurality of vehicles traveling in cooperation need to be parked in a same parking area by cooperative traveling. For a vehicle that has acquired the cooperative travel association information, the vehicle may send a request for acquiring cooperative travel association information to other vehicles located in a preset position range before the vehicle completes the parking. For all other vehicles receiving the request for acquiring cooperative travel association information, when one other vehicle has completed the parking before the vehicle completes the parking, the other vehicle may generate cooperative travel association information including the position of the parking space occupied by the other vehicle, and the other vehicle sends the cooperative travel association information including the position of the parking space occupied by the other vehicle to the vehicle. Thus, the vehicle may determine that the parking space has been occupied. For the other vehicle transmitting the cooperative travel association information, an operation thereof is to travel from a position to the parking space occupied by the other vehicle. For the vehicle acquiring the cooperative travel association information, the cooperative travel association information may be used to avoid performing an operation conflicted with an operation performed by the other vehicle, that is, to prevent the vehicle from traveling from a position to the parking space in which the other vehicle transmitting the cooperative travel association information has been parked.

Step 202, the vehicle acquiring the cooperative travel association information performs an operation associated with the cooperative travel association information.

In the present embodiment, the vehicle that acquires the cooperative traveling correlation information performs an operation associated with the cooperative traveling correlation information.

For example, a plurality of vehicles traveling in cooperation together travel from a starting point position to the same destination. When the plurality of vehicles traveling in cooperation travel together to an intersection of narrow width. In order to prevent at least a part of the plurality of vehicles traveling in cooperation from simultaneously passing through the intersection of the narrow road width, a host vehicle traveling in the front of the plurality of vehicles traveling in cooperation first passes through the intersection of the narrow road width, and the host vehicle may determine the order in which each of the other vehicles except the host vehicle passes through the intersection of the narrow width, and the host vehicle generates travel association information including the order in which each other vehicle passes. When the vehicle detects approaching the intersection of the narrow road width according to the acquired positioning information and an electronic map, such as a high precision map, the vehicle sends a request for acquiring cooperative travel association information to the host vehicle to acquire cooperative travel association information including the order in which each other vehicle passes. The operation performed by the vehicle associated with the cooperative travel association information includes stopping before the location of the intersection of narrow road width, waiting for other vehicles that has the passing order ahead of the vehicle to pass through the intersection of narrow road width. Each of the other vehicles sequentially passes through the intersection of the narrow road width in the passing order, and after each of the other vehicles passes through the intersection of the narrow road width, a notification message may be sent to the host vehicle, and the host vehicle updates the passing order of the other vehicles that have recently passed through the intersection of the narrow road width. The vehicle may transmit a request for acquiring cooperative travel association information to the host vehicle at a predetermined interval, and the host vehicle may generate cooperative travel association information including the passing sequence of other vehicles that have recently passed through the intersection of narrow road width, and transmit the cooperative travel association information including the passing sequence of other vehicles that have recently passed through the intersection of narrow road width to the vehicle. The operation performed by the vehicle in association with the cooperative travel association information includes determining whether it's passing order is after the passing order of the other vehicles that have recently passed through the intersection of narrow road width and is closest to the passing order of the other vehicles that have recently passed through the intersection of narrow road width, and determining whether or not to pass through the intersection of narrow road width according to the determination result.

For another example, a plurality of vehicles traveling in cooperation need to be parked in a same parking area by cooperative traveling. For a vehicle that has acquired the cooperative travel association information, the vehicle may send a request for acquiring cooperative travel association information to other vehicles located in a preset position range before the vehicle completes the parking. For all other vehicles receiving the request for acquiring cooperative travel association information, when one other vehicle has completed the parking before the vehicle completes the parking, the other vehicle may generate cooperative travel association information including the position of the parking space occupied by the other vehicle, and the other vehicle sends the cooperative travel association information including the position of the parking space occupied by the other vehicle to the vehicle. Thus, the vehicle may determine that the parking space has been occupied. The operation performed by the vehicle in association with the cooperative travel association information includes calculating a travel route from a current position of the vehicle to a currently unoccupied parking space, and traveling to the unoccupied parking space according to the calculated travel route.

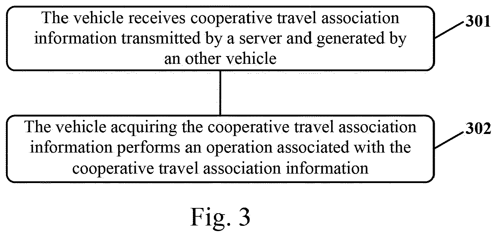

Referring to Fig. 3, a flow diagram of a vehicle control method according to another embodiment of the present disclosure is shown. The method includes the following steps.

Step 301, the vehicle receives cooperative travel association information transmitted by a server and generated by an other vehicle.

In the present embodiment, other vehicle do not specifically refer to a certain vehicle. For a given vehicle, vehicles other than the given vehicle that may travel in cooperation with the vehicle may be referred to as the other vehicle.

In the present embodiment, the cooperative travel association information may be used to avoid a vehicle acquiring the cooperative travel association information among a plurality of vehicles traveling in cooperation from performing an operation that conflicts with an operation performed by other vehicles.

In the present embodiment, when a vehicle is traveling, the vehicle may receive at least one piece of cooperative travel association information generated by another vehicle sent by the server, thereby obtaining at least one piece of cooperative travel association information generated by another vehicle. The at least one piece of cooperative travel association information generated by another vehicles may be pre-sent by at least one of other vehicles to the server.

For example, for a vehicle acquiring cooperative travel association information, before the vehicle completes parking, another vehicle completes parking, and after the another vehicle occupies a parking space, the another vehicle may generate cooperative travel association information including an identification of the another vehicle, a position of the parking space occupied by the another vehicle, and a position of an unoccupied parking space detected by the another vehicle. The another vehicle may send the cooperative travel association information generated by the another vehicle to the server. The vehicle may send a request for acquiring cooperative traveling association information to the server, and receive the cooperative traveling association information generated by the another vehicle sent by the service. The cooperative travel association information generated by the another vehicle may also be actively sent by the server to the vehicle.

In the present embodiment, when a vehicle is traveling, the vehicle may receive at least one piece of cooperative traveling correlation information generated by another vehicle sent by the server, thereby obtaining at least one piece of cooperative traveling correlation information generated by the another vehicle. The at least one piece of cooperative travel association information generated by the another vehicle may be pre-sent by at least one of other vehicles to the intelligent roadside device and then sent to the server via the intelligent roadside device.

For example, the intelligent roadside device is an intelligent parking pile corresponding to a parking space provided in a parking area. For a vehicle acquiring cooperative travel association information, before the vehicle completes parking, another vehicle completes parking, and after the another vehicle occupies a parking space, the another vehicle may generate cooperative travel association information including an identification of the another vehicle, a position of the parking space occupied by the another vehicle, and a position of an unoccupied parking space detected by the another vehicle. The another vehicle may transmit the cooperative traveling association information generated by the another vehicle to the intelligent parking pile corresponding to the parking space occupied by the vehicle through the vehicle-to-everything (V2X) technology. The intelligent parking pile corresponding to the parking spaces occupied by the vehicle may send the cooperative traveling association information generated by the another vehicle to the server. The vehicle may send a request for acquiring cooperative traveling association information to the server, and receive the cooperative traveling association information generated by the another vehicle sent by the server. The cooperative travel association information generated by the another vehicle may also be actively sent by the server to the vehicle.

In this embodiment, when a plurality of vehicles traveling in cooperation need to be parked by cooperative traveling, for one of the plurality of vehicles traveling in cooperation, the cooperative travel association information generated by the other vehicle includes one or more items of: attribute information of a parking space occupied by the other vehicle, attribute information of an unoccupied parking space detected by the other vehicle, or a parking trajectory of the other vehicle. The attribute information of the parking space may include, but is not limited to, the position of the parking space, and the size of the parking space.

For example, for a vehicle in a plurality of vehicles traveling in cooperation acquiring cooperative travel association information, before the vehicle completes parking, the vehicle acquires a request for acquiring cooperative travel association information generated by another vehicle within a preset position range, and the another vehicle has completed parking before the vehicle completes parking. The cooperative travel association information generated by the another vehicle includes a position and a size of a parking space occupied by the another vehicle, a position and a size of an unoccupied parking space detected by the another vehicle, and a parking trajectory of the another vehicle.

The vehicle may determine the positions of all the occupied parking spaces, and the positions and the sizes of all the detected parking spaces capable of being parked, by acquiring the cooperative travel association information generated by each other vehicle that has completed the parking before the vehicle has completed the parking, so as to prevent the vehicle from traveling to the parking spaces that have been occupied and causing the vehicle to be unable to park, congestion, or the like.

Step 302, the vehicle acquiring the cooperative travel association information performs an operation associated with the cooperative travel association information.

In the present embodiment, the vehicle acquiring the cooperative travel association information may perform an operation associated with the cooperative travel association information.

For example, for a vehicle acquiring cooperative travel association information, the vehicle acquires cooperative travel association information generated by the other vehicle within a predetermined position range before the vehicle completes parking. The other vehicle has completed parking before the vehicle has completed parking, and the cooperative travel association information generated by the other vehicle includes a position of a parking space occupied by the other vehicle, a position of an unoccupied parking space detected by the other vehicle, and a parking trajectory of the other vehicle. The vehicle may determine a parking space that has been occupied based on the position of the parking space occupied by the other vehicle, and determine a position of a parking space that is currently unoccupied based on the position of the unoccupied parking space detected by the other vehicle. The operation associated with the cooperative travel association information performed by the vehicle includes: calculating that traveling from the current position to the unoccupied parking space to complete the parking. When the unoccupied parking space capable of being parked is in the vicinity of the parking space occupied by the other vehicle, the operation associated with the cooperative travel association information performed by the vehicle includes driving to the vicinity of the parking space occupied by the other vehicle according to the parking trajectory of the other vehicle, and then driving to the unoccupied parking space to complete the parking.

The vehicle may determine positions of all the occupied parking spaces, and positions of all the detected parking spaces capable of being parked, by acquiring the cooperative travel association information generated by each other vehicle that has completed parking before the vehicle completes parking, so as to avoid the vehicle from traveling to the parking spaces that have been occupied and causing the vehicle to be unable to park, congestion, or the like.

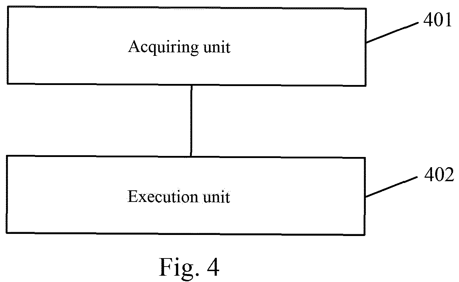

Referring to Fig. 4, as an implementation of the method shown in each of the above figures, an embodiment of the present disclosure provides a vehicle control apparatus, the vehicle control apparatus being mounted in a vehicle. The vehicle control apparatus embodiment corresponds to the method embodiment shown in Fig. 2.

As shown in Fig. 4, the vehicle control apparatus of the present embodiment includes an acquiring unit 401 and an execution unit 402. The acquiring unit 401 is configured to acquire cooperative travel association information generated by an other vehicle traveling in cooperation with the vehicle. The cooperative travel association information is used to avoid the vehicle from performing an operation conflicted with an operation performed by the other vehicle. The execution unit 402 is configured to perform an operation associated with the acquired cooperative travel association information.

In some alternative implementations of the present embodiment, the acquiring unit is further configured to receive the cooperative traveling association information generated by the other vehicle and sent by a server, the cooperative travel association information generated by the other vehicle being sent to the server in advance via the other vehicle.

In some alternative implementations of the present embodiment, the acquiring unit is further configured to receive the cooperative travel association information generated by the other vehicle and sent by a server, the cooperative travel association information generated by the other vehicle being sent to the server in advance via an intelligent roadside device communicating with the other vehicle.

In some alternative implementations of the present embodiment, the cooperative travel association information generated by the other vehicle comprises one or more items of: attribute information of a parking space occupied by the other vehicle, attribute information of an unoccupied parking space detected by the other vehicle, or a parking trajectory of the other vehicle.

In some alternative implementations of the present embodiment, the vehicle to which the vehicle control apparatus is mounted is an autonomous driving vehicle.

An embodiment of the present disclosure further provides a vehicle, the vehicle may be provided with one or more processors and a memory storing one or more programs. The one or more programs may contain instructions for performing the operations described in the above-described embodiments. The one or more programs, when executed by the one or more processors, cause the one or more processors to execute instructions for the operations described in the above embodiments.

An embodiment of the present disclosure further provides a computer readable medium. The computer readable medium may be included in the vehicle; or may exist alone and is not assembled into the vehicle. The computer readable medium stores one or more computer programs thereon, the one or more programs, when executed by the vehicle, cause the vehicle to perform the operations as described in the above embodiments.

It should be noted that the computer readable medium described by the embodiments of the present disclosure may be computer readable signal medium or computer readable storage medium or any combination of the above two. An example of the computer readable storage medium may include, but not limited to: electric, magnetic, optical, electromagnetic, infrared, or semiconductor systems, apparatus, elements, or a combination of any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fiber, a portable compact disk read only memory (CD-ROM), an optical memory, a magnet memory or any suitable combination of the above. In the embodiments of the present disclosure, the computer readable storage medium may be any physical medium containing or storing programs which may be used by a command execution system, apparatus or element or incorporated thereto. While in the embodiments of the present disclosure, the computer readable signal medium may include data signal in the base band or propagating as parts of a carrier, in which computer readable program codes are carried. The propagating data signal may take various forms, including but not limited to: an electromagnetic signal, an optical signal or any suitable combination of the above. The signal medium that can be read by computer may be any computer readable medium except for the computer readable storage medium. The computer readable signal medium is capable of transmitting, propagating or transferring programs for use by, or used in combination with, a command execution system, apparatus or element. The program codes contained on the computer readable medium may be transmitted with any suitable medium including but not limited to: wired, optical cable, RF medium etc., or any suitable combination of the above.

It should be noted that the computer readable medium described by the embodiments of the present disclosure may be computer readable signal medium or computer readable storage medium or any combination of the above two. An example of the computer readable storage medium may include, but not limited to: electric, magnetic, optical, electromagnetic, infrared, or semiconductor systems, apparatus, elements, or a combination of any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fiber, a portable compact disk read only memory (CD-ROM), an optical memory, a magnet memory or any suitable combination of the above. In the embodiments of the present disclosure, the computer readable storage medium may be any physical medium containing or storing programs which may be used by a command execution system, apparatus or element or incorporated thereto. While in the embodiments of the present disclosure, the computer readable signal medium may include data signal in the base band or propagating as parts of a carrier, in which computer readable program codes are carried. The propagating data signal may take various forms, including but not limited to: an electromagnetic signal, an optical signal or any suitable combination of the above. The signal medium that can be read by computer may be any computer readable medium except for the computer readable storage medium. The computer readable signal medium is capable of transmitting, propagating or transferring programs for use by, or used in combination with, a command execution system, apparatus or element. The program codes contained on the computer readable medium may be transmitted with any suitable medium including but not limited to: wired, optical cable, RF medium etc., or any suitable combination of the above.

The flow charts and block diagrams in the accompanying drawings illustrate architectures, functionalities and operations that may be implemented according to the systems, methods and computer program products of the various embodiments of the present disclosure. In this regard, each of the blocks in the flow charts or block diagrams may represent a module, a program segment, or a code portion, said module, program segment, or code portion comprising one or more executable instructions for implementing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system executing specified functions or operations, or by a combination of a dedicated hardware and computer instructions.

The above description only provides an explanation of the preferable embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the disclosure. Technical schemes formed by the above-described features being interchanged with, but not limited to, technical features with similar functions disclosed in the present disclosure are examples.

## Claims

1. A vehicle control method, comprising:
acquiring, by a vehicle, cooperative travel association information generated by an other vehicle, wherein the other vehicle travels in cooperation with the vehicle, and the cooperative travel association information is used to avoid the vehicle from performing an operation conflicted with an operation performed by the other vehicle; and
performing, by the vehicle, an operation associated with the acquired cooperative travel association information.

2. The method according to claim 1, wherein acquiring, by the vehicle, cooperative travel association information generated by the other vehicle comprises:
receiving, by the vehicle, the cooperative travel association information generated by the other vehicle and sent by a server, the cooperative travel association information generated by the other vehicle being sent to the server in advance via the other vehicle.

3. The method according to claim 1, wherein acquiring, by the vehicle, cooperative travel association information generated by the other vehicle comprises:
receiving, by the vehicle, the cooperative travel association information generated by the other vehicle and sent by a server, the cooperative travel association information generated by the other vehicle being sent to the server in advance via an intelligent roadside device communicating with the other vehicle.

4. The method according to any one of claims 1 to 3, wherein the cooperative travel association information generated by the other vehicle comprises one or more items of: attribute information of a parking space occupied by the other vehicle, attribute information of an unoccupied parking space detected by the other vehicle, or a parking trajectory of the other vehicle.

5. The method according to any of claims 1 to 3, wherein the vehicle is an autonomous driving vehicle.

6. A vehicle control apparatus, the vehicle control apparatus being mounted in a vehicle, the vehicle control apparatus comprising:
an acquiring unit configured to acquire cooperative travel association information generated by an other vehicle traveling in cooperation with the vehicle, wherein the cooperative travel association information is used to avoid the vehicle from performing an operation conflicted with an operation performed by the other vehicle; and
an execution unit configured to perform an operation associated with the acquired cooperative travel association information.

7. The apparatus according to claim 6, wherein the acquiring unit is further configured to receive the cooperative traveling association information generated by the other vehicle and sent by a server, the cooperative travel association information generated by the other vehicle being sent to the server in advance via the other vehicle.

8. The apparatus according to claim 6, wherein the acquiring unit is further configured to receive the cooperative travel association information generated by the other vehicle and sent by a server, the cooperative travel association information generated by the other vehicle being sent to the server in advance via an intelligent roadside device communicating with the other vehicle.

9. The apparatus according to any one of claims 6 to 8, wherein the cooperative travel association information generated by the other vehicle comprises one or more items of: attribute information of a parking space occupied by the other vehicle, attribute information of an unoccupied parking space detected by the other vehicle, or a parking trajectory of the other vehicle.

10. The apparatus according to any one of claims 6 to 8, wherein the vehicle is an autonomous driving vehicle.

11. A vehicle, comprising:
one or more processors; and
a memory storing one or more programs,
wherein the one or more programs when executed by the one or more processors, cause the one or more processors to implement the method according to any one of claims 1 to 5.

12. A computer readable storage medium, storing computer programs thereon, wherein the computer programs, when executed by a processor, implements the method according to any one of claims 1 to 5.
